# EUROPEAN PATENT APPLICATION

(11) **EP 3 392 802 A1**
(43) Date of publication of application: **24.10.2018**
(21) Application number: 18167154.6
(22) Date of filing: 13.04.2018
(51) Int. Cl.: G06K 9/00, G06K 9/62

(54) **COMPUTER-IMPLEMENTED 3D MODEL ANALYSIS METHOD, ELECTRONIC DECIVE, AND NON-TRANSITORY COMPUTER READABLE STORAGE MEDIUM**

(30) Priority: 17.04.2017 US 201762486009 P
(71) Applicant: HTC Corporation, Taoyuan City 330, (TW)
(72) Inventor: Chang, Jui-Hsuan, 330 Taoyuan City (TW); Yang, Hung-Yi, 330 Taoyuan City (TW)
(74) Representative: Murgitroyd & Company

(57) **Abstract**

A computer-implemented 3D model analysis method includes: projecting, by a processing circuit, multiple sample points in a 3-dimensional model of a scene to one or more 2-dimensional planes in order to obtain one or more 2-dimensional images corresponding to the 3-dimensional model of the scene; performing, by the processing circuit, an object segmentation and classification based on the one or more 2-dimensional images to obtain 2-dimensional sematic information on the one or more 2-dimensional planes; and projecting, by the processing circuit, the 2-dimensional sematic information to the 3-dimensional model of the scene to identify one or more target objects in the scene.

## Description

### RELATED APPLICATIONS

This application claims priority to US Provisional Application Serial Number 62/486,009, filed April 17, 2017, which is herein incorporated by reference.

### BACKGROUND

### Technical Field

The present disclosure relates to an electronic device and a 3D model analysis method. More particularly, the present disclosure relates to the electronic device and the 3D model analysis method related to computer vision.

### Description of Related Art

Nowadays, computer vision methods are widely used in various applications. For example, in virtual reality (VR) or augmented reality (AR) application, computer vision methods are used for the VR / AR system to identify objects, real-world environment and/or scenes.

### SUMMARY

One aspect of the present disclosure is related to a computer-implemented 3D model analysis method. In accordance with some embodiments of the present disclosure, the computer-implemented 3D model analysis method includes: obtaining, by a processing circuit, a 3-dimensional model of a scene; projecting, by the processing circuit, multiple sample points in the 3-dimensional model to one or more 2-dimensional planes in order to obtain one or more 2-dimensional images corresponding to the 3-dimensional model of the scene; performing, by the processing circuit, an object segmentation and classification based on the one or more 2-dimensional images to obtain 2-dimensional sematic information on the one or more 2-dimensional planes; and projecting, by the processing circuit, the 2-dimensional sematic information to the 3-dimensional model of the scene to identify one or more target objects in the scene.

Another aspect of the present disclosure is related to an electronic device. In accordance with some embodiments of the present disclosure, the electronic device includes a processing circuit, a memory electrically connected to the processing circuit and configured to store a 3-dimensional model of a scene, and one or more programs. The one or more programs are stored in the memory and configured to be executed by the processing circuit. The one or more programs including instructions for: projecting multiple sample points in the 3-dimensional model to one or more 2-dimensional planes in order to obtain one or more 2-dimensional images corresponding to the 3-dimensional model of the scene; performing an object segmentation and classification based on the one or more 2-dimensional images to obtain 2-dimensional sematic information on the one or more 2-dimensional planes; and projecting the 2-dimensional sematic information to the 3-dimensional model of the scene to identify one or more target objects in the scene.

Another aspect of the present disclosure is related to a non-transitory computer readable storage medium. In accordance with some embodiments of the present disclosure, the non-transitory computer readable storage medium stores one or more programs including instructions, which when executed, causes a processing circuit to perform operations including: projecting multiple sample points in a 3-dimensional model of a scene to one or more 2-dimensional planes in order to obtain one or more 2-dimensional images corresponding to the 3-dimensional model of the scene; performing an object segmentation and classification based on the one or more 2-dimensional images to obtain 2-dimensional sematic information on the one or more 2-dimensional planes; and projecting the 2-dimensional sematic information to the 3-dimensional model of the scene to identify one or more target objects in the scene.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiments, with reference made to the accompanying drawings as follows:
Fig. 1 is a schematic block diagram illustrating an electronic device in accordance with some embodiments of the present disclosure.
Fig. 2 is a diagram illustrating a scene including one or more target objects according to some embodiments of the present disclosure.
Fig. 3 is a flowchart illustrating the computer-implemented 3D model analysis method in accordance with some embodiments of the present disclosure.
Fig. 4A is a diagram illustrating the operation of the electronic device according to some embodiments of the present disclosure.
Fig. 4B is a diagram illustrating the operation of the electronic device according to some embodiments of the present disclosure.
Fig. 5 is a diagram illustrating the operation of the electronic device according to some embodiments of the present disclosure.
Fig. 6 is a diagram illustrating the sematic scene including one or more identified target objects according to some embodiments of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

It will be understood that, in the description herein and throughout the claims that follow, when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Moreover, "electrically connect" or "connect" can further refer to the interoperation or interaction between two or more elements.

It will be understood that, in the description herein and throughout the claims that follow, although the terms "first," "second," etc. may be used to describe various elements, these elements should not be limited by these terms. These terms are only used to distinguish one element from another. For example, a first element could be termed a second element, and, similarly, a second element could be termed a first element, without departing from the scope of the embodiments.

It will be understood that, in the description herein and throughout the claims that follow, the terms "comprise" or "comprising," "include" or "including," "have" or "having," "contain" or "containing" and the like used herein are to be understood to be open-ended, i.e., to mean including but not limited to.

It will be understood that, in the description herein and throughout the claims that follow, the phrase "and/or" includes any and all combinations of one or more of the associated listed items.

It will be understood that, in the description herein and throughout the claims that follow, words indicating direction used in the description of the following embodiments, such as "above," "below," "left," "right," "front" and "back," are directions as they relate to the accompanying drawings. Therefore, such words indicating direction are used for illustration and do not limit the present disclosure.

It will be understood that, in the description herein and throughout the claims that follow, unless otherwise defined, all terms (including technical and scientific terms) have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any element in a claim that does not explicitly state "means for" performing a specified function, or "step for" performing a specific function, is not to be interpreted as a "means" or "step" clause as specified in 35 U.S.C. § 112(f). In particular, the use of "step of" in the claims herein is not intended to invoke the provisions of 35 U.S.C. § 112(f).

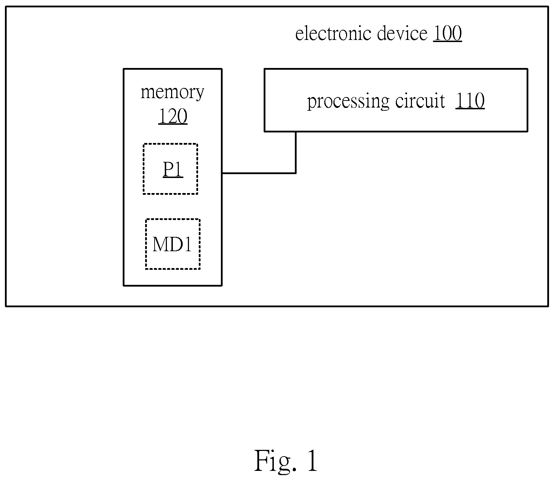

Reference is made to Fig. 1. Fig. 1 is a schematic block diagram illustrating an electronic device 100 in accordance with some embodiments of the present disclosure. The electronic device 100 may be configured to perform a 3D model analysis and environment perception. Specifically, in some embodiments, the electronic device 100 may be applied in a virtual reality (VR) / mixed reality (MR) / augmented reality (AR) system in order to integrate one or more objects in the physical/real-world environment into the virtual environment or virtual objects. The objects in the physical/real-world environment may be first identified by the 3D model reconstruction, such that the integration may be performed based on the identified results. For example, the electronic device 100 may reorganize and classify one or more objects in the 3D model, in order to perform corresponding interaction based on types of the objects. In some embodiments, the objects may be classified based on shape characteristics, distance characteristics, color characteristics, texture characteristics, or any combinations thereof, but the present disclosure is not limited thereto. In various embodiments, the objects may be classified by any proper characteristics acquired from the 3D model.

For example, the electronic device 100 may be realized by, a camera device, a standalone head mounted device (HMD) or VIVE HMD. In detail, the standalone HMD may handle such as processing location data of position and rotation, graph processing or others data calculation.

As shown in Fig. 1, the electronic device 100 includes a processing circuit 110, and a memory 120. One or more programs P1 are stored in the memory 120 and configured to be executed by the processing circuit 110, in order to perform the 3D model analysis.

In some embodiments, the processing circuit 110 can be realized by, for example, one or more processors, such as central processors and/or microprocessors, but are not limited in this regard. In some embodiments, the memory 120 includes one or more memory devices, each of which includes, or a plurality of which collectively include a computer readable storage medium. The computer readable storage medium may include a read-only memory (ROM), a flash memory, a floppy disk, a hard disk, an optical disc, a flash disk, a flash drive, a tape, a database accessible from a network, and/or any storage medium with the same functionality that can be contemplated by persons of ordinary skill in the art to which this disclosure pertains.

In structural, the memory 120 is electrically connected to the processing circuit 110. The memory 120 is configured to store a 3-dimensional model MD1 of a scene.

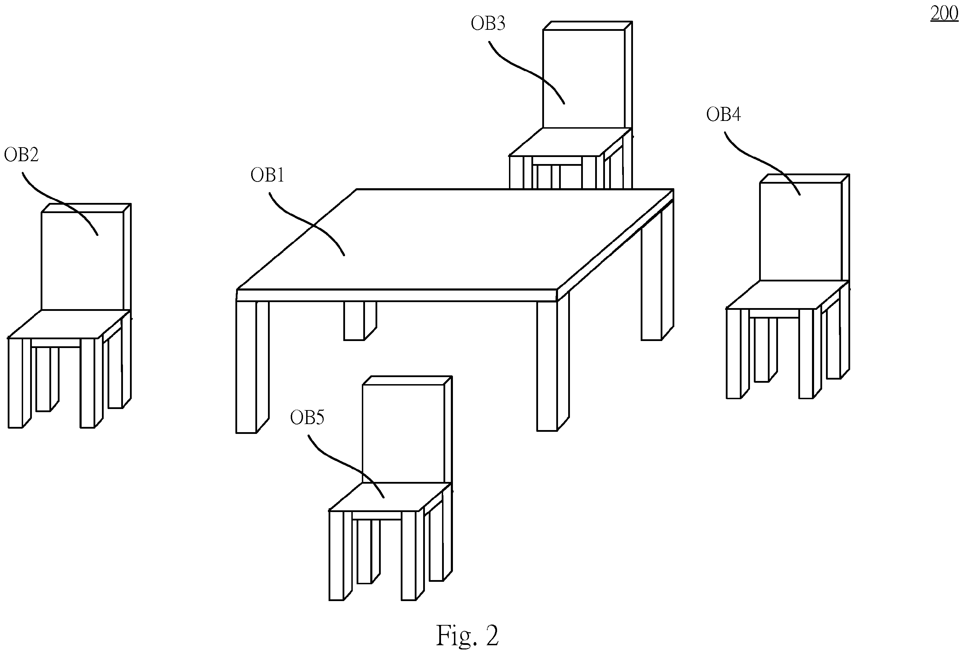

Reference is made to Fig. 2. Fig. 2 is a diagram illustrating the scene 200 including one or more target objects TO1∼TO5 according to some embodiments of the present disclosure.

As shown in Fig. 2, for example, the target object TO1 in the scene 200 may be a desk, and target objects TO2∼TO5 in the scene 200 may be four chairs around the desk in the real-world environment. The 3-dimensional model MD1 corresponds to the scene 200 may be obtained by applying various 3D model reconstruction methods to the scene. For example, in some embodiments, a depth camera arranged in the electronic device 100 may move around the scene 200 and capture the depth raw data in various relative positons of the viewpoints in order to reconstruct the 3-dimensional model MD1. In some other embodiments, the 3-dimensional model MD1 may be reconstructed and pre-stored in the memory 120 previously by another electronic device having the depth camera.

Accordingly, after the 3D model reconstruction, the one or more target objects TO1∼TO5 may be found in the 3-dimensional model MD1. However, the one or more target objects TO1∼TO5 are unknown, and the electronic device 100 is unable to perform specific interaction in the VR/MR/AR applications based on types of the target objects TO1∼TO5. For example, instructions such as "put a mug on the desk" may not be properly executed since the electronic device 100 is unable to identify which one of the target objects TO1∼TO5 is the desk.

Therefore, the electronic device 100 is configured to perform a computer-implemented 3D model analysis method in order to identify and classify the one or more target objects TO1∼TO5 found in the 3-dimensional model MD1. After the 3D model analysis, the target object TO1 may be recognized as the desk, and the target objects TO2-TO5 may be recognized as chairs correspondingly.

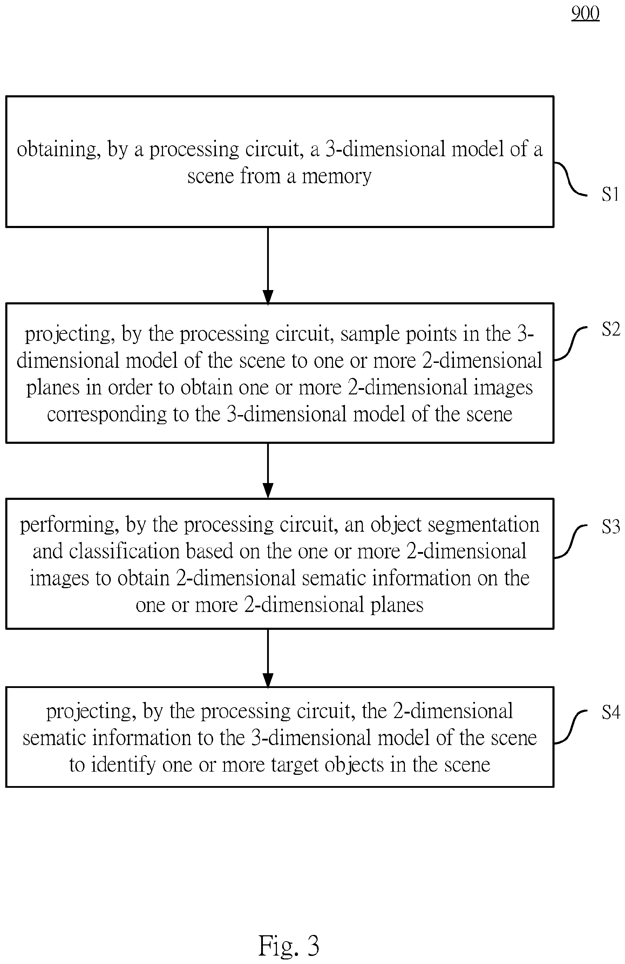

For better understanding of the present disclosure, the detailed operation of the electronic device 100 will be discussed in accompanying with the embodiments shown in Fig. 3. Fig. 3 is a flowchart illustrating the computer-implemented 3D model analysis method 900 in accordance with some embodiments of the present disclosure. It should be noted that the computer-implemented 3D model analysis method 900 can be applied to an electrical device having a structure that is the same as or similar to the structure of the electronic device 100 shown in Fig. 1. To simplify the description below, the embodiments shown in Fig. 1 and Fig. 2 will be used as an example to describe the computer-implemented 3D model analysis method 900 according to some embodiments of the present disclosure. However, the present disclosure is not limited to application to the embodiments shown in Fig. 1 and Fig. 2.

As shown in Fig. 3, the computer-implemented 3D model analysis method 900 includes operations S1, S2, S3, and S4. In operation S1, the processing circuit 110 is configured to obtain the 3-dimensional model MD1 of the scene 200 from the memory 120.

In operation S2, the processing circuit 110 is configured to projecting multiple sample points in the 3-dimensional model MD1 to one or more 2-dimensional planes in order to obtain one or more 2-dimensional images corresponding to the 3-dimensional model MD1 of the scene 200.

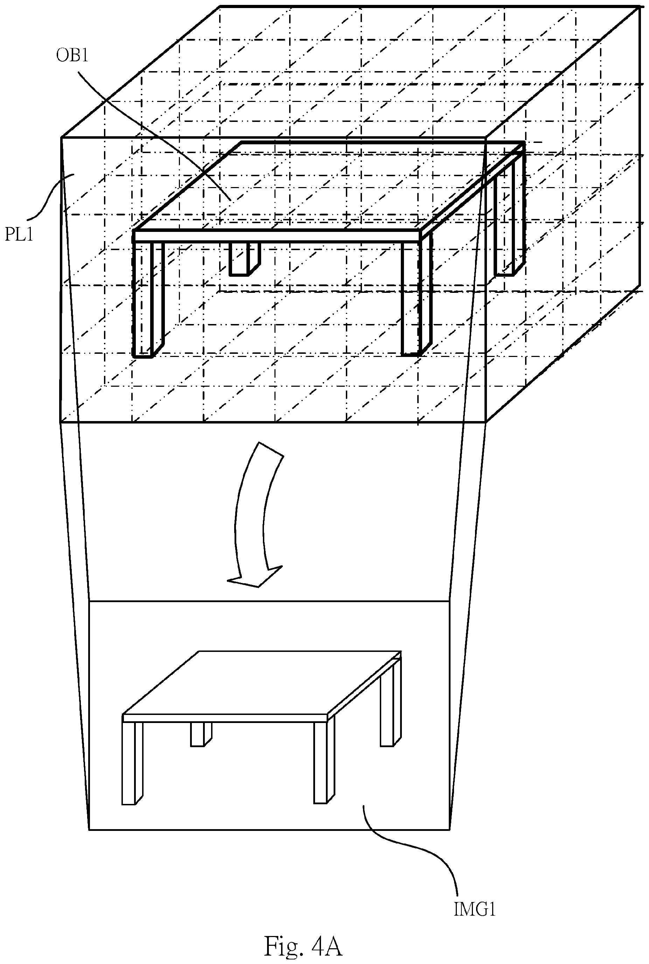

Reference is made to Fig. 4A. Fig. 4A is a diagram illustrating the operation of the electronic device 100 according to some embodiments of the present disclosure.

As shown in Fig. 4A, the sample points in 3-dimensional model MD1 may be projected to a 2-dimensional plane PL1 to obtain a corresponding 2-dimensional image IMG1. Specifically, in some embodiments, the processing circuit 110 may be configured to sample the 3-dimensional model MD1 by voxel scaling to obtain the sample points in the 3-dimensional model MD1. Then, the processing circuit 110 may project the sample points to one or more 2-dimensional planes.

Alternatively stated, the 2-dimensional image IMG1 may be considered as a picture taken by a virtual camera at a first view point position. Thus, the 3-dimensional information in the 3-dimensional model MD1 may be converted into the 2-dimensional information in the 2-dimensional image IMG1 by the dimensionality reduction applied.

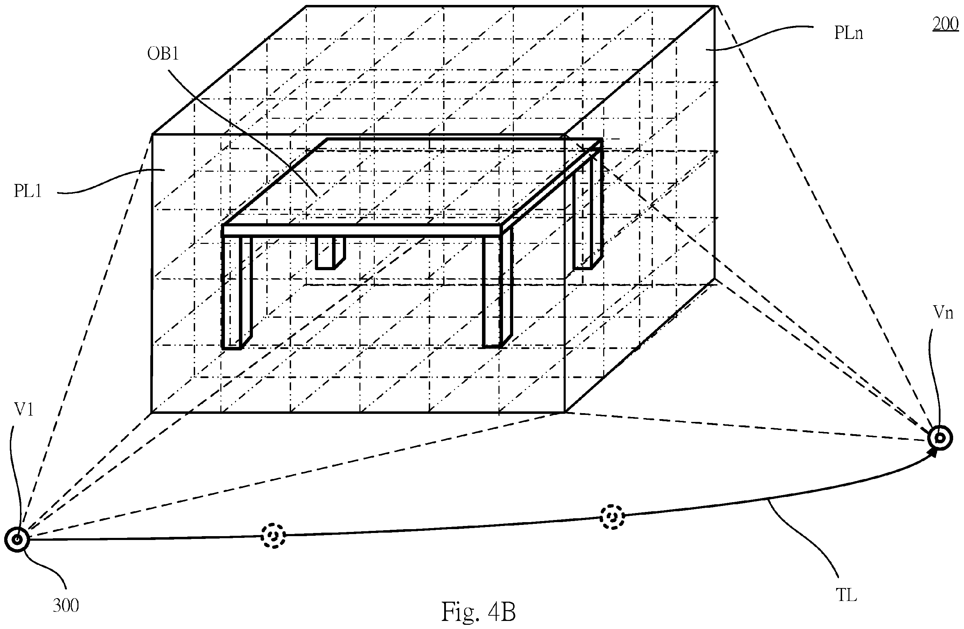

Reference is made to Fig. 4B. Fig. 4B is a diagram illustrating the operation of the electronic device 100 according to some embodiments of the present disclosure. As shown in Fig. 4B, in some embodiments, the processing circuit 110 is configured to project the sample points to two or more 2-dimensional planes PL1-PLn in order to obtain two or more 2-dimensional images. The obtained 2-dimensional images respectively corresponds to the scene 200 viewed from different viewpoints V1-Vn. In some embodiments, those viewpoints are arranged along a tracking line TL. That is, the virtual camera 300 moves around the scene 200 along the tracking line TL, in order to generate the 2-dimensional images, in which each of the 2-dimensional image indicates the scene 200 observed from a specific view point (e.g., V1-Vn). Since two or more 2-dimensional images are obtained, the blind spot area may be reduced or eliminated accordingly.

Next, in operation S3, the processing circuit 110 is configured to perform an object segmentation and classification based on the one or more 2-dimensional images IMG1 to obtain 2-dimensional sematic information on the one or more 2-dimensional planes.

Specifically, various 2D recognition and segmentation method may be applied by the processing circuit 110 in order to get a 2D segmented result. For example, various machine learning algorithms, such as a Convolutional Neural Network, may be used to recognize and classify the target objects OB1-OB5 based on the 2D information on the 2-dimensional images IMG1.

In some embodiments, the processing circuit 110 may be configured to classify the target objects OB1-OB5 based on shape information, color information, depth information, texture information, or a combination thereof.

Alternatively stated, the processing circuit 110 may classify a first object (e.g., target object OB1) of the one or more target objects OB1-OB5 to a first object type (e.g., a desk) on the condition that the shape information, the color information, the depth information, the texture information, or the combination thereof matches one or more predetermined characteristics of the first object type. Similarly, the processing circuit 110 may classify a second object (e.g., target objects OB2-OB5) of the one or more target objects OB1-OB5 to a second object type (e.g., a chair) on the condition that the shape information, the color information, the texture information, or the combination thereof matches the one or more predetermined characteristics of the second object type.

Since the recognition and segmentation are performed based on the 2D information, the calculation complexity is reduced comparing to the calculation of the recognition and segmentation using 3D information. Thus, the dimensionality reduction brings lower time-consumption and lower computer usage and/or computer requirements. Accordingly, the sematic segmentation may be speeded up and provide a satisfying user experience.

Finally, in operation S4, the processing circuit 110 is configured to project the 2-dimensional sematic information back to the 3-dimensional model MD1 of the scene 200 to identify the one or more target objects OB1-OB5 in the scene 200.

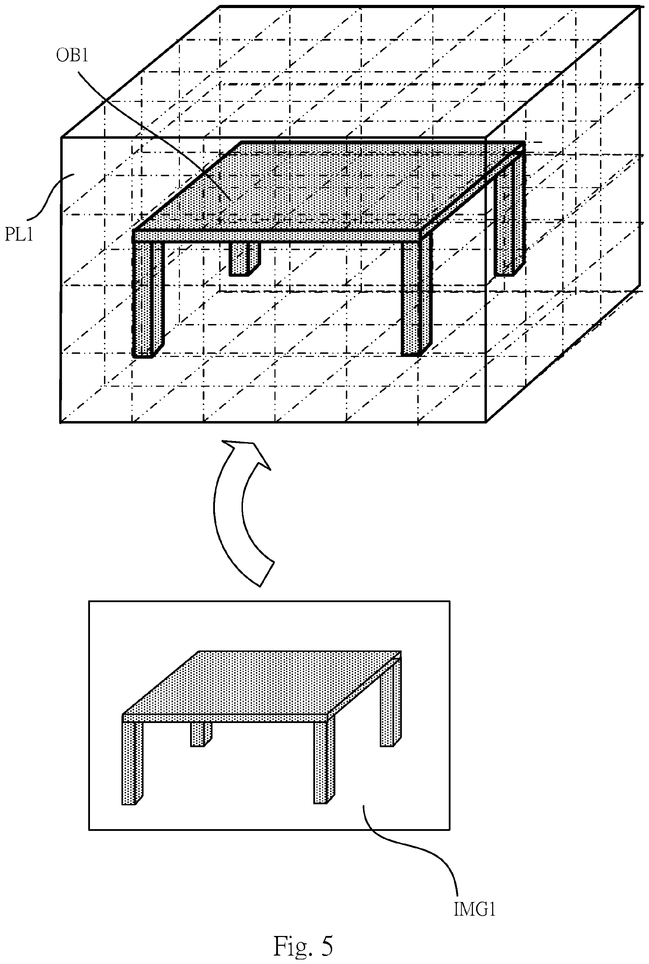

Reference is made to Fig. 5. Fig. 5 is a diagram illustrating the operation of the electronic device 100 according to some embodiments of the present disclosure. As shown in Fig. 5, the 2-dimensional sematic result may be projected back to corresponding positions and coordinates in the 3-dimensional model. Thus, the 3D sematic information for the original unknown target objects OB1-OB5 may be given through the 2D segmented result.

For example, in some embodiments, in operation S4, the processing circuit 110 may be configured to label the 3-dimensional model MD1 to indicate the one or more target objects TO1∼TO5 identified in the scene 200 according to an identification result of the recognition and segmentation performed based on the 2D information in the previous operation S3.

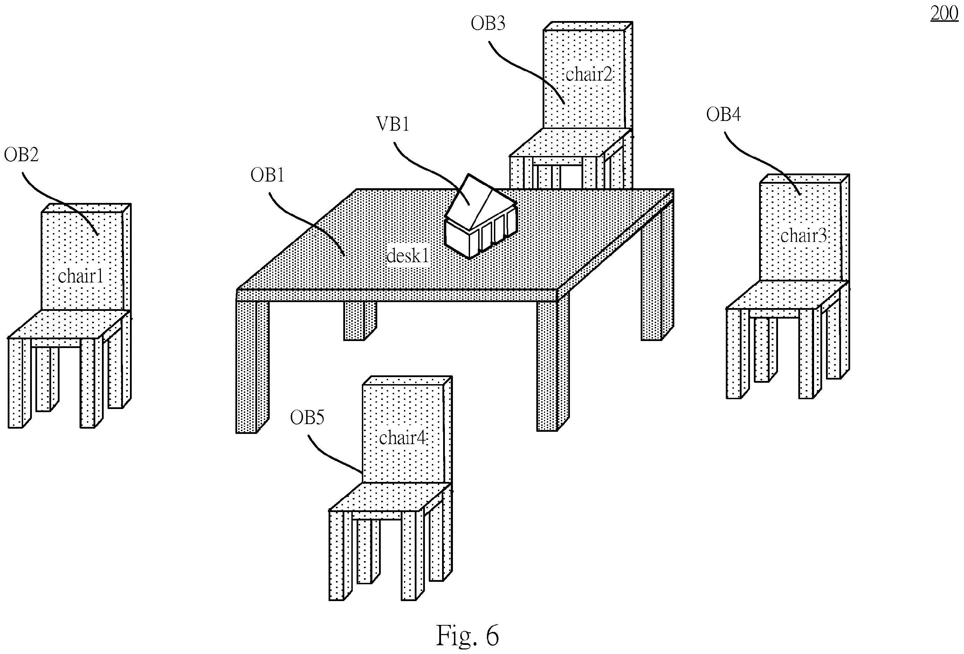

Reference is made to Fig. 6. Fig. 6 is a diagram illustrating the sematic scene 200 including one or more identified target objects OB1-OB6 according to some embodiments of the present disclosure. As shown in Fig. 6, by the operations S1-S4 of the computer-implemented 3D model analysis method 900, the target objects OB1-OB6 may be recognized and classified to different types. For example, the target object OB1 is identified as the desk and tagged with "desk1", and the target objects OB2-OB5 are identified as chairs and tagged with "chair1," "chair2," "chair3," and "chair4" respectively.

Thus, the sematic 3D scene and/or objects may achieve various interactions in the virtual world based on the sematic information, in order to achieve the integration of objects in real word and environment/objects in virtual world in a MR application. For example, as shown in Fig. 6, a virtual object VB1 may be put on the desk (i.e., the target object OB1).

It is noted that the above embodiments are simplified for better understanding of the present disclosure. In some embodiments, the operations of the computer-implemented 3D model analysis method 900 mentioned above may be performed repeatedly in order to achieve the 3D model analysis. It should be noted that, in some embodiments, the computer-implemented 3D model analysis method 900 may be implemented as a computer program. When the computer program is executed by a computer, an electronic device, or the processing circuit 110 in Fig. 1, this executing device performs the computer-implemented 3D model analysis method 900. The computer program can be stored in a non-transitory computer readable storage medium such as a ROM (read-only memory), a flash memory, a floppy disk, a hard disk, an optical disc, a flash disk, a flash drive, a tape, a database accessible from a network, or any storage medium with the same functionality that can be contemplated by persons of ordinary skill in the art to which this disclosure pertains.

In addition, it should be noted that in the operations of the abovementioned computer-implemented 3D model analysis method 900 , no particular sequence is required unless otherwise specified. Moreover, the operations may also be performed simultaneously or the execution times thereof may at least partially overlap.

Furthermore, the operations of the computer-implemented 3D model analysis method 900 may be added to, replaced, and/or eliminated as appropriate, in accordance with various embodiments of the present disclosure.

Through the operations of various embodiments described above, a 3D model analysis method is implemented to realize the reorganization and segmentation of objects in a 3D model for the application in the VR, AR or MR by using 2D and 3D inter-projection to reduce dimensionality in order to speed up the analysis process, and reduce calculating complexity and the time consumption required, which brings a smoother user experience when a user interact with the object in the real world in the VR, AR or MR environment.

Various functional components or blocks have been described herein. As will be appreciated by persons skilled in the art, the functional blocks will preferably be implemented through circuits (either dedicated circuits, or general purpose circuits, which operate under the control of one or more processors and coded instructions), which will typically include transistors or other circuit elements that are configured in such a way as to control the operation of the circuity in accordance with the functions and operations described herein. As will be further appreciated, the specific structure or interconnections of the circuit elements will typically be determined by a compiler, such as a register transfer language (RTL) compiler. RTL compilers operate upon scripts that closely resemble assembly language code, to compile the script into a form that is used for the layout or fabrication of the ultimate circuitry. Indeed, RTL is well known for its role and use in the facilitation of the design process of electronic and digital systems.

Although the present disclosure has been described in considerable detail with reference to certain embodiments thereof, other embodiments are possible. Therefore, the scope of the appended claims should not be limited to the description of the embodiments contained herein.

## Claims

1. A computer-implemented 3D model analysis method, comprising:
projecting, by a processing circuit, a plurality of sample points in a 3-dimensional model of a scene to one or more 2-dimensional planes in order to obtain one or more 2-dimensional images corresponding to the 3-dimensional model of the scene;
performing, by the processing circuit, an object segmentation and classification based on the one or more 2-dimensional images to obtain 2-dimensional sematic information on the one or more 2-dimensional planes; and
projecting, by the processing circuit, the 2-dimensional sematic information to the 3-dimensional model of the scene to identify one or more target objects in the scene.

2. The computer-implemented 3D model analysis method of claim 1 or 2, further comprising:
sampling, by the processing circuit, the 3-dimensional model by voxel scaling to obtain the plurality of sample points in the 3-dimensional model.

3. The computer-implemented 3D model analysis method of claim 1, further comprising:
labeling, by the processing circuit, the 3-dimensional model to indicate the one or more target objects identified in the scene according to an identification result.

4. The computer-implemented 3D model analysis method of any one of the proceeding claims, further comprising:
classifying, by the processing circuit, the one or more target objects based on a shape information, a color information, a depth information, a texture information, or a combination thereof.

5. The computer-implemented 3D model analysis method of claim 4, further comprising:
classifying, by the processing circuit, a first object of the one or more target objects to a first object type on the condition that the shape information, the color information, the depth information, the texture information, or the combination thereof matches one or more predetermined characteristics of the first object type; and
classifying, by the processing circuit, a second object of the one or more target objects to a second object type on the condition that the shape information, the color information, the depth information, the texture information, or the combination thereof matches the one or more predetermined characteristics of the second object type.

6. The computer-implemented 3D model analysis method of any one of the proceeding claims, further comprising:
projecting, by the processing circuit, the plurality of sample points to a plurality of 2-dimensional planes in order to obtain a plurality of 2-dimensional images, wherein the plurality of 2-dimensional images respectively corresponds to the scene viewed from a plurality of viewpoints.

7. The computer-implemented 3D model analysis method of claim 6, wherein the plurality of viewpoints are arranged along a tracking line.

8. An electronic device, comprising:
a processing circuit;
a memory electrically connected to the processing circuit and configured to store a 3-dimensional model of a scene; and
one or more programs, wherein the one or more programs are stored in the memory and configured to be executed by the processing circuit, the one or more programs comprising instructions for:
projecting a plurality of sample points in the 3-dimensional model to one or more 2-dimensional planes in order to obtain one or more 2-dimensional images corresponding to the 3-dimensional model of the scene;
performing an object segmentation and classification based on the one or more 2-dimensional images to obtain 2-dimensional sematic information on the one or more 2-dimensional planes; and
projecting the 2-dimensional sematic information to the 3-dimensional model of the scene to identify one or more target objects in the scene.

9. The electronic device as claimed in claim 8, wherein the one or more programs further comprise instructions for:
sampling the 3-dimensional model by voxel scaling to obtain the plurality of sample points in the 3-dimensional model.

10. The electronic device as claimed in claim 8 or 9, wherein the one or more programs further comprise instructions for:
labeling the 3-dimensional model to indicate the one or more target objects identified in the scene according to an identification result.

11. The electronic device as claimed in any one of the claims 8 to 10, wherein the one or more programs further comprise instructions for:
classifying the one or more target objects based on a shape information, a color information, a depth information, a texture information, or a combination thereof.

12. The electronic device as claimed in claim 11, wherein the one or more programs further comprise instructions for:
classifying a first object of the one or more target objects to a first object type on the condition that the shape information, the color information, the depth information, the texture information, or the combination thereof matches one or more predetermined characteristics of the first object type; and
classifying, by the processing circuit, a second object of the one or more target objects to a second object type on the condition that the shape information, the color information, the texture information, or the combination thereof matches the one or more predetermined characteristics of the second object type.

13. The electronic device as claimed in any one of the claims 8 to 12, wherein the one or more programs further comprise instructions for:
projecting, by the processing circuit, the plurality of sample points to a plurality of 2-dimensional planes in order to obtain a plurality of 2-dimensional images, wherein the plurality of 2-dimensional images respectively corresponds to the scene viewed from a plurality of viewpoints.

14. The electronic device as claimed in claim 13, wherein the plurality of viewpoints are arranged along a tracking line.

15. A non-transitory computer readable storage medium storing one or more programs, comprising instructions, which when executed, causes a processing circuit to perform operations comprising:
projecting a plurality of sample points in a 3-dimensional model of a scene to one or more 2-dimensional planes in order to obtain one or more 2-dimensional images corresponding to the 3-dimensional model of the scene;
performing an object segmentation and classification based on the one or more 2-dimensional images to obtain 2-dimensional sematic information on the one or more 2-dimensional planes; and
projecting the 2-dimensional sematic information to the 3-dimensional model of the scene to identify one or more target objects in the scene.
